# EUROPEAN PATENT SPECIFICATION

(11) **EP 0 483 124 B1**
(45) Date of publication and mention of the grant of the patent: **30.11.1994**
(21) Application number: 92200257.1
(22) Date of filing: 14.02.1990
(51) Int. Cl.: B65G 23/08, B65G 13/08

(54) **Conveyor**
Förderer
Transporteur

(30) Priority: 15.02.1989 NL 8900361
(43) Date of publication of application: 29.04.1992
(62) Divisional of application: 90200334.2
(73) Proprietor: RAPISTAN VAN DER LANDE B.V., NL-5460 AA Veghel (NL)
(72) Inventor: van den Goor, Jakobus Marie, NL-5674 SH Nuenen (NL)
(74) Representative: Van kan, Johan Joseph Hubert, Ir.

(56) References cited:
- DE-A- 2 649 648
- US-A- 2 540 099

## Description

The invention relates to a conveyor provided with a frame part and at least one tubular roll supported by said frame part via a supporting plate and a bearing, which tubular roll can be rotated about its central axis, by means of a motor arranged inside said tubular roll, for exerting a force on an object moving across the conveyor, whilst a carrying means, whose outer circumference is connected with one end of the tubular roll, is secured to the outgoing shaft.

From DE-A-2,649,648 there is known such a construction wherein a tubular roll is fixed to the outgoing shaft of a motor, which motor is surrounded by a sleeve located inside said tubular roll.

At its end remote from the outgoing shaft of the motor the sleeve is secured to a massive extension piece, which is accommodated, with its end remote from the sleeve, in a flange forming part of a frame of a device. The tubular roll is supported near one end only, by means of a bearing arranged between the tubular roll and the extension piece. A disadvantage of this construction is i.a. that during operation the motor will be loaded by transverse forces.

GB-A-668,631 shows a tubular roll, in the interior of which there is mounted an electromotor. The roll is thereby rotatable about a shaft having a fixed arrangement in the frame, to which shaft the windings of the electromotor are secured. Between the tubular roll and the shaft there is provided a sleeve supporting rotor rods, said sleeve near its ends being provided with flanges, which are rotatable about the shaft via bearings. Between one end of the sleeve and the tubular roll there is provided a gear. This construction is complicated and it is difficult to assemble and disassemble.

US-A-3,362,686 illustrates a tubular roll in which an electromotor is arranged. The roll can be driven, via a gear provided at one end of the electromotor, by the outgoing shaft of the electromotor.

Stubs, being integral with plate-shaped parts extending perpendicularly to the longitudinal axis of the electromotor, are secured to the opposed ends of the motor by means of said plate-shaped parts. Said stubs serve to support the tubular roll and the motor in a frame. When such a construction is used undesirable bending forces may be transferred to the motor via said stubs.

From US-A-4,013,166 there is known a construction wherein a motor, arranged inside a tubular roll, is provided in a housing having a U-shaped section, to one end of which there is secured a shaft, which is supported in a frame. On said shaft there is also journalled, via a bearing, a flange provided on one end of the tubular roll.

The outgoing shaft of the motor is secured to a hub, which is rotatably supported by a bearing, which is accommodated in a flange provided at one end of the housing. The hub is furthermore connected with a flange provided in the interior of the tubular roll, between the ends of the tubular roll. In the hub there is furthermore journalled the end of a further shaft located in the extension of the outgoing shaft of the motor, said further shaft,besides being supported in the hub,also being supported, by means of a bearing, in a flange provided at one end of the tubular roll. The end of said latter shaft projecting from the tubular roll serves to support the roll. This construction is complicated. whilst in case of an incorrect alignment of the various aligned shafts the occurrence of bending forces acting on the outgoing motor shaft cannot be avoided.

US-A-2,540,099 furthermore shows a construction of a tubular roll with a motor provided therein, whereby the motor is coupled to the tubular roll via a gear which is accommodated in a further housing accommodated inside the tubular roll.Also this construction is heavy and complicated, and it is difficult to assemble and disassemble.

The object of the invention is to obtain a conveyor of the kind mentioned in the preamble, which has a simple, compact construction.

According to the invention this objective can be accomplished in that the supporting plate connected with said frame part is secured to the end of the motor remote from the outgoing shaft and the bearing is provided between the outer circumference of said supporting plate and the inner circumference of the roll, whilst the outgoing shaft is surrounded by a supporting means secured to said frame part, and between the outer circumference of said supporting means and the inner circumference of the roll there is provided a further bearing.

When using such a construction hardly any radially directed forces are exerted, in particular on the outgoing shaft.

The construction according to the invention can be efficiently used in particular with a conveyor wherein the frame part supporting the motor is pivotable about an axis perpendicularly intersecting or crossing the central axis of the motor, so that the roll will serve as a deviating means for objects moved across the conveyor. Particularly for such deviating means a compact, light construction is important, in order to make an effective arrangement between the various intended positions of such a roll possible. Such a device is known per se from the prior Dutch Patent Application 8,601,621 published as EP-A-0 251 391. As is described in said publication a few small rolls,arranged side by side,are usally used with such a construction. It will be apparent that in particular when such a device is used both a considerable simplification of the design of the drive for the rolls and a particularly compact construction can be realised.

The invention will be further explained hereinafter with reference to a possible embodiment of the construction according to the invention illustrated in the accompanying figures.

Figure 1 shows a section of an embodiment of a possible construction of the device according to the invention.

Figure 2 shows a side elevational view of figure 1.

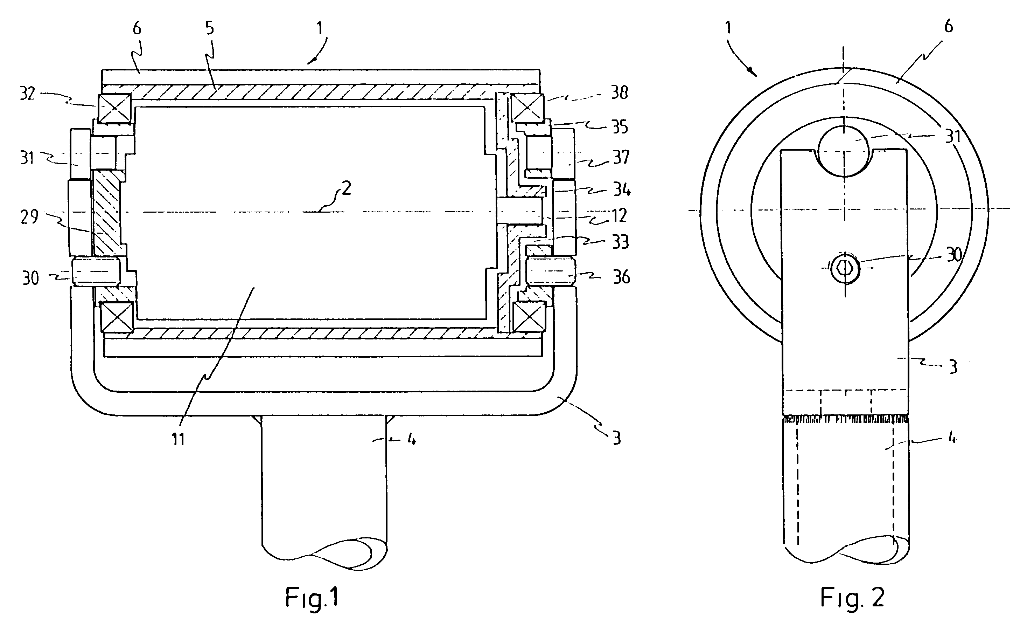

Figure 1 shows a roll 1, which is rotatably journalled, about an axis of rotation 2, in a U-shaped bracket 3, which is secured to the upper end of a shaft 4 which, together with said bracket 3, forms a frame part which will be pivotable relative to a further part of a conveyor (not shown), about the central axis of the shaft 4, all this in a manner such as described in the prior Patent Application No. 8,601,621, whose contents are considered to be incorporated herein by reference.

In the illustrated embodiment the roll is built up of a metal casing 5, which is surrounded by a shell 6 consisting of a slightly resilient material, e.g. rubber or a plastic material.

In the interior of the hollow roll 1 there is located an electromotor 11. The end of the motor 11 remote from the outgoing motor shaft 12 is secured to a supporting plate 29 fixed to said end of the motor 11. Said supporting plate 29 is provided with a screwed stud 30, which is accommodated with one end in a hole in a leg of the U-shaped bracket 3. Furthermore the end of a stepped stud 31 is inserted into a bore provided in the supporting plate 29, said stud 31 resting in a semi-circular recess provided in the free end of a leg of the bracket 3.

The supporting plate 29 is surrounded by a bearing 32, by means of which one end of the roll 1 is supported on the supporting plate 29.

The outgoing motor shaft 12 is coupled to the other end of the roll 1 by means of a plate-shaped means 33 having at its outer circumference radially protruding parts (not shown) engaging in recesses (not shown) provided in the inner wall of the casing 5. Further said plate-shaped means 33 is integral with a hub 34 secured to the outgoing motor shaft 12.

The hub 34 is surrounded by a supporting means 35 secured to one leg of the bracket 3, said supporting means 35 being connected with the bracket 3 in a similar way as the supporting means 29,by means of a screwed stud 36 and a stud 37, which is located in a recess provided in the end of a leg of said bracket. Between the outer circumference of the supporting means 35 and the inner circumference of the roll 5 there is again provided a bearing 38.

When using the above described construction the roll 1 is driven by its own electromotor 11, said combination of roll and electromotor having a very compact construction. Forces exerted on the roll 1 in a direction transverse to its axis of rotation 2 are directly transferred to the bracket 3 via the bearings 32 and 38, the supporting means 29 and 35, the studs 31 and 37 and/or the studs 30 and 36, so that the motor 11 substantially is not loaded by radial and axial forces as a result of which it is possible to use a light version of the motor 11.

## Claims

1. Conveyor provided with a frame part (3) and at least one tubular roll (1) supported by said frame part via a supporting plate (29) and a bearing (32), which tubular roll (1) can be rotated about its central axis, by means of a motor (11) arranged inside said tubular roll (1), for exerting a force on an object moving across the conveyor, whilst a carrying means (33, 34), whose outer circumference is connected with one end of the tubular roll (1), is secured to the outgoing shaft (12) of the motor, characterized in that the supporting plate (29) connected with said frame part (3) is secured to the end of the motor (11) remote from the outgoing shaft and that the bearing (32) is provided between the outer circumference of said supporting plate and the inner circumference of the roll, whilst the outgoing shaft (12) is surrounded by a supporting means (35) secured to said frame part (3) and a further bearing (38) is provided between the outer circumference of said supporting means (35) and the inner circumference of the roll (1).

2. Conveyor according to claim 1, characterized in that the supporting means (29, 35) is connected with the frame part by a screwed stud (30, 36) and a stud (31, 37) located in a recess of said frame part (3).

3. Conveyor according to claim 1 or 2, characterized in that the frame part (3) supporting the roll (1) is pivotable about a pivot axis (4) intersecting or crossing the axis of rotation of said roll (1).

## Patentansprüche

1. Förderer mit einem Rahmenteil (3) und mindestens einer vom Rahmenteil über eine Lagerplatte (29) und ein Lager (32) gelagerten rohrförmigen Rolle (1), die mit Hilfe eines innerhalb der rohrförmigen Rolle (1) angeordneten Motors (10) um ihre Mittelachse gedreht werden kann, um eine Kraft auf einen sich über den Förderer bewegenden Gegenstand auszuüben, während eine Trageinrichtung (33, 34), deren Außenumfang mit einem Ende der rohrförmigen Rolle (1) verbunden ist, an der Ausgangswelle (12) des Motors befestigt ist, dadurch gekennzeichnet, daß die mit dem Rahmenteil (3) verbundene Lagerplatte (29) an dem von der Ausgangswelle entfernten Ende des Motors (11) befestigt ist und daß das Lager (32) zwischen dem Außenumfang der Lagerplatte und dem Innenumfang der Rolle vorgesehen ist, wobei die Ausgangswelle (12) von einer am Rahmenteil (3) befestigten Lagereinrichtung (35) umgeben wird und ein weiteres Lager (38) zwischen dem Außenumfang der Lagereinrichtung (35) und dem Innenumfang der Rolle (1) vorgesehen ist.

2. Förderer nach Anspruch 1, dadurch gekennzeichnet, daß die Lagereinrichtung (29, 35) mit dem Rahmenteil über einen Schraubbolzen (30, 36) und einen in einer Ausnehmung des Rahmenteils (3) angeordneten Bolzen (31, 37) verbunden ist.

3. Förderer nach Anspruch 1 oder 2, dadurch gekennzeichnet, daß der die Rolle (1) lagernde Rahmenteil (3) um eine Schwenkachse (4), die die Drehachse der Rolle (1) schneidet oder kreuzt, verschwenkbar ist.

## Revendications

1. Transporteur comprenant une monture (3) et au moins un rouleau tubulaire (1) supporté par ladite monture par l'intermédiaire d'une plaque de maintien (29) et d'un roulement (32), ledit rouleau tubulaire (1) pouvant être entraîné en rotation autour de son axe central, au moyen d'un moteur (11) placé à l'intérieur du dit rouleau tubulaire (1), pour exercer une force sur un objet en déplacement sur le transporteur, tandis qu'un élément de transmission (33,34) dont la circonférence extérieure est connectée à une extrémité du rouleau tubulaire (1) est fixé à l'arbre de sortie (12) du moteur, caractérisé en ce que la plaque de maintien (29) reliée à la dite monture (3) est fixée à l'extrémité du moteur (11) à l'opposé de l'arbre de sortie, et en ce que le roulement (32) est placé entre la circonférence extérieure de ladite plaque de maintien et la circonférence intérieure du rouleau, tandis que l'arbre de sortie (12) est entouré par un élément de maintien (35) fixé à ladite monture (3) et un autre roulement (38) est prévu entre la circonférence extérieure dudit élément de maintien (35) et la circonférence intérieure du rouleau (1).

2. Transporteur suivant la revendication 1, caractérisé en ce que les éléments de maintien (29,35) sont reliés à la monture par un goujon fileté (30,36) et par un goujon (31,37) logé dans un évidement de ladite monture (3).

3. Transporteur suivant la revendication 1 ou 2, caractérisé en ce que ladite monture (3) supportant le rouleau (1) peut pivoter autour d'un axe de rotation (4) qui coupe ou croise l'axe de rotation dudit rouleau (1).
